# EUROPÄISCHE PATENTANMELDUNG

(11) **EP 0 979 975 A2**
(43) Veröffentlichungstag der Anmeldung: **16.02.2000**
(21) Anmeldenummer: 99115291.9
(22) Anmeldetag: 02.08.1999
(51) Int. Cl.: F24D 5/04

(54) **Warmluft-Heizsystem**

(30) Priorität: 10.08.1998 DE 29814327 U
(71) Anmelder: Thesz, Michael Georg, 83404 Mitterfelden (DE)
(72) Erfinder: Thesz, Michael Georg, 83404 Mitterfelden (DE)
(74) Vertreter: Manitz, Finsterwald & Partner

(57) **Zusammenfassung**

Es wird ein Warmluft-Heizsystem mit zumindest einem Anschluß für ein Zuluftrohr (32-35) zum Zuführen von erwärmter Zuluft von dem Heizsystem zu einem zu beheizenden Raum beschrieben. Das Heizsystem umfaßt zumindest einen Anschluß für ein Abluftrohr (10-12) zum Abführen von Luft aus einem Raum zu dem Heizsystem sowie eine Heizvorrichtung zum Erwärmen der durch das Zuluftrohr transportierten Luft. Es sind eine Vielzahl von Anschlüssen für eine Vielzahl von Zuluftrohren vorgesehen, durch die getrennte Zuluftströme transportierbar sind. Weiterhin ist die Temperatur zumindest eines Teils der jeweils in den Zuluftrohren transportierten Zuluftströme getrennt regelbar.

## Beschreibung

Die vorliegende Erfindung betrifft ein Warmluft-Heizsystem mit zumindest einem Anschluß für ein Zuluftrohr zum Zuführen von erwärmter Zuluft von dem Heizsystem zu einem zu einem zu beheizenden Raum, mit zumindest einem Anschluß für ein Abluftrohr zum Abführen von Luft aus einem Raum zu dem Heizsystem und mit einer Heizvorrichtung zum Erwärmen der durch das Zuluftrohr transportierten Luft.

Bei Heizsystemen dieser Art wird üblicherweise für die Zu- und die Abluft jeweils ein Rohr in den Wänden oder Decken eines Gebäudes verlegt, um zum einen die verbrauchte Abluft aus den zu beheizenden Räumen abzuführen und erwärmte Zuluft zu den zu beheizenden Räumen zu transportieren. Um eine Vielzahl von unterschiedlichen Räumen versorgen zu können, mündet jeweils das Ende des Zuluftrohrs und des Abluftrohrs in dem von dem Heizsystem am weitesten entfernten Raum, während von den übrigen Räumen jeweils seitliche Anschlußrohre in die Zu- und Abluftrohre münden.

Um einen gleichmäßigen Luftstrom mit einer gleichmäßigen Strömungsgeschwindigkeit innerhalb der beiden Rohre zu erhalten, muß der Durchmesser der Rohre von ihren freien Enden zum Heizsystem hin jeweils ab jeder seitlichen Einmündung vergrößert werden. Bei dem Abluftrohr wird dadurch der Tatsache Rechnung getragen, daß mit jeder seitlichen Einmündung ein zusätzlicher Luftstrom in das Abluftrohr eingespeist wird, so daß der Summenstrom in Richtung des Heizsystems ständig erhöht wird.

Bei dem Zuluftrohr wird erreicht, daß nach dem jeweiligen Abzweigen eines Teilluftstromes durch Austreten aus den seitlichen Abzweigungen die Strömungsgeschwindigkeit aufgrund des verringerten Durchmessers nahezu gleich bleibt.

Problematisch ist dabei, daß insbesondere bei einer großen Anzahl von seitlichen Abzweigungen, d. h. von zu beheizenden Räumen, der Durchmesser des Zuluft- und des Abluftrohres so groß werden kann, daß eine versteckte Anordnung innerhalb einer Wand oft nicht mehr möglich ist.

Weiterhin besteht bei den bekannten Heizsystemen das Problem, daß bei der Abführung von Luft aus Naßräumen oder geruchsbelasteten Räumen, wie beispielsweise Bad, Dusche, WC, Küche, Labor und dergleichen, die aus einem solchen Raum abgeführte Abluft teilweise aus den seitlichen Anschlüssen austreten und somit in andere Räume eintreten kann. Dies ist insbesondere dann kritisch, wenn Abluft von Geräten mit eigenem Ventilatorbetrieb, wie bei beispielsweise Wäschetrockner, Dunstabzugshauben, Saunaanlagen und dergleichen, angeschlossen werden.

Ein weiteres Problem bei bekannten Heizsystemen der eingangs genannten Art besteht darin, daß die von der Heizvorrichtung über das Zuluftrohr transportierte, warme Luft in alle Räume gleichmäßig verteilt wird. Eine Steuerung der in die einzelnen Räume eingebrachten Wärme wird lediglich dadurch erreicht, daß die Austrittsöffnungen in den jeweiligen Räumen in ihrer Größe veränderbar bzw. verschließbar sind. Insbesondere wenn lediglich ein Teil der an das Heizsystem angeschlossenen Räume beheizt werden soll, führt dies zu einer Energieverschwendung, da eine größere Luftmenge erwärmt wird, als eigentlich erforderlich wäre.

Es ist eine Aufgabe der Erfindung, ein Warmluft-Heizsystem der eingangs genannten Art so auszubilden, daß sie möglichst energiesparend arbeitet.

Ausgehend von einem Warmluft-Heizsystem der eingangs genannten Art wird diese Aufgabe erfindungsgemäß dadurch gelöst, daß eine Vielzahl von Anschlüssen für eine Vielzahl von Zuluftrohren vorgesehen ist, durch die getrennte Zuluftströme transportierbar sind, und daß die Temperatur zumindest eines Teils der jeweils in den Zuluftrohren transportierten Zuluftströme getrennt regelbar ist.

Dadurch, daß eine Vielzahl von Anschlüssen für eine Vielzahl von Zuluftrohren vorgesehen ist, kann grundsätzlich jeder zu beheizende Raum mit einem eigenen Zuluftrohr versorgt werden. Da erfindungsgemäß die Temperatur der jeweils in den Zuluftrohren transportierten Zuluftströme getrennt regelbar ist, kann somit individuell für jeden Raum gezielt die gewünschte Temperatur eingestellt werden. Soll ein Raum nicht oder nur mit niedriger Temperatur beheizt werden, so wird der entsprechende Zuluftstrom nicht oder nur geringfügig beheizt, so daß in jedem Fall nur die Energiemenge aufgewendet wird, die auch tatsächlich benötigt wird. Der Energiebedarf kann somit gegenüber den bekannten Heizsystemen deutlich verringert werden.

Weiterhin können die Zuluftrohre einen wesentlich geringeren Querschnitt besitzen als die Zuluftrohre bei Heizsystemen aus dem Stand der Technik, da beispielsweise jeweils nur ein einziger Raum mit einem Zuluftrohr versorgt wird. In diesem Fall besitzt das Zuluftrohr keinerlei Abzweigungen, so daß der geringe Querschnitt über die Gesamtlänge des Zuluftrohres beibehalten werden kann. Auf diese Weise ist eine unproblematische Verlegung der Zuluftrohre auch in dünnen Wänden oder Zwischendecken möglich.

Nach einer bevorzugten Ausführungsform der Erfindung ist eine Vielzahl von Anschlüssen für eine Vielzahl von Abluftrohren vorgesehen, durch die getrennte Abluftströme transportierbar sind. Auch die getrennte Ausbildung von Abluftrohren, insbesondere eine separate Ausbildung je eines Abluftrohres für je einen Raum, führt dazu, daß die Abluftrohre bei einem erfindungsgemäßen Heizsystem einen deutlich geringeren Querschnitt besitzen als bei einem Heizsystem nach dem Stand der Technik. Somit können auch die Abluftrohre unproblematisch in dünnen Wanden und Zwischendecken verlegt werden.

Weiterhin ist bei einer getrennten Führung der Abluftrohre für jeden Raum bzw. für je einen Teil von Räumen gewährleistet, daß die aus einem Raum abgeführte verbrauchte oder geruchsbelastete Luft nicht über seitliche Austrittsöffnungen in einen anderen Raum eintreten kann. Es ist dabei vorteilhaft, wenn jeweils Räume oder Geräte, die verbrauchte oder geruchsbelastete Luft enthalten bzw. erzeugen jeweils durch ein eigenes Abluftrohr versorgt werden, während Räume, die relativ unverbrauchte Luft bzw. geruchsfreie Luft enthalten, an ein gemeinsames Abluftrohr angeschlossen sein können.

Die getrennte Temperaturregelung der Zuluftströme kann beispielsweise durch getrennte Heizelemente erfolgen, die in und/oder an den Zuluftrohren vorgesehen sind. Dabei können die Heizelemente elektrisch und/oder durch ein insbesondere flüssiges, dampf- oder gasförmiges Heizmedium erhitzbar sein. Bei der Verwendung von getrennten Heizelementen ist eine sehr präzise Steuerung der Temperatur für die einzelnen Zuluftströme möglich.

Es ist auch möglich, daß Zuluftströme den Zuluftrohren an unterschiedlichen Stellen des Heizsystems zugeführt werden und daß die Zuluftströme an diesen unterschiedlichen Stellen zumindest teilweise unterschiedliche Temperaturen besitzen, so daß auf diese Weise die getrennte Temperaturregelung der Zuluftströme erfolgt. Beispielsweise ist es möglich, daß zumindest ein Teil der Zuluftrohre zumindest zwei Zuführöffnungen besitzt, über die dem Zuluftrohr jeweils Zuluft zuführbar ist, und daß in und/oder an dem Zuluftrohr jeweils eine Steuervorrichtung vorgesehen ist, über die die Menge des über die jeweilige Zuführöffnung dem Zuluftrohr zugeführten Zuluftstrom steuerbar ist. Dabei kann die Steuervorrichtung bevorzugt als Steuerklappe ausgebildet sein.

Über die Steuervorrichtung ist somit ein Mischen von Zuluft unterschiedlicher Temperatur möglich, so daß auf diese Weise die Temperatur in den jeweiligen Zuluftröhren einstellbar ist.

Das erfindungsgemäße Heizsystem kann zumindest einen weiteren Anschluß für ein Umluftrohr zum Transportieren von Umluft aus Räumen mit im wesentlichen unbelasteter oder unverbrauchter Luft und/oder zumindest einen weiteren Anschluß für ein Frischluftrohr zum Transportieren von Frischluft in das Heizsystem besitzen. Da die Umluft üblicherweise eine höhere Temperatur besitzt als von außen zugeführte Frischluft, kann im Umluftbetrieb eine schnellere Aufheizung der zu beheizenden Räume erreicht werden.

Je nach Bedarf kann der Anteil an Frischluft und Umluft steuerbar sein, so daß eine schnellere Aufheizung der Räume als bei reinem Frischluftbetrieb möglich ist, jedoch zumindest ein vorgegebener Anteil Frischluft den zu beheizenden Räumen zugeführt wird.

Nach einer weiteren bevorzugten Ausführungsform der Erfindung sind das Umluftrohr und das Frischluftrohr zusammengeführt und an einem gemeinsamen Anschluß angeschlossen, wobei der Anteil an Umluft und Frischluft über ein in und/oder an der Verbindungsstelle zwischen dem Umluftrohr und dem Frischluftrohr oder im Bereich zwischen der Verbindungsstelle und dem gemeinsamen Anschluß angeordnete Steuervorrichtung, insbesondere über eine Steuerklappe steuerbar ist. Auf diese Weise kann sehr einfach sowohl zwischen einem reinen Umluft-, einem reinen Frischluft- und einem gemischten Umluft-Frischluft-Betrieb umgeschalten werden.

Nach einer weiteren bevorzugten Ausführungsform der Erfindung umfaßt das Heizsystem einen Wärmetauscher, dem die über die Abluftrohre transportierte Abluft und die über das Umluftrohr und/oder Frischluftrohr transportierte Umluft und/oder Frischluft zuführbar ist, so daß die Umluft und/oder Frischluft durch die der Abluft entzogene Wärmeenergie erwärmbar ist. Der Wärmetauscher kann beispielsweise als Plattenwärmetauscher ausgebildet sein, so daß die in der warmen Abluft enthaltene Wärmeenergie beispielsweise an die im Kreuzstrom und/oder Gegenstrom vorbeigeführte kalte Umluft oder Frischluft abgegeben wird. Dadurch ist eine weitere Energieersparnis bei einem erfindungsgemäß ausgebildeten Heizsystem möglich.

Nach einer weiteren vorteilhaften Ausführungsform der Erfindung ist eine Wassererwärmungseinheit, insbesondere zum Erwärmen von Brauchwasser, vorgesehen, wobei bedarfsweise Wärmeenergie aus der Wassererwärmungseinheit der Heizvorrichtung zuführbar ist. Durch die Kopplung der erfindungsgemäßen Heizvorrichtung mit einer üblicherweise in einem Haus vorgesehenen Wassererwärmungseinheit, beispielsweise einem Brauchwasserspeicher, kann der Wirkungsgrad eines erfindungsgemäß ausgebildeten Heizsystems weiter erhöht werden. Da heißes Brauchwasser in großen Mengen üblicherweise nur selten benötigt wird, kann dieses der Wassererwärmungseinheit und insbesondere dem Wärmetauscher problemlos entnommen werden, um im Bedarfsfall eine schnellere oder stärkere Erhitzung der Zufuhrluft zu erreichen.

Weitere vorteilhafte Ausführungsformen der Erfindung sind in den Unteransprüchen angegeben.

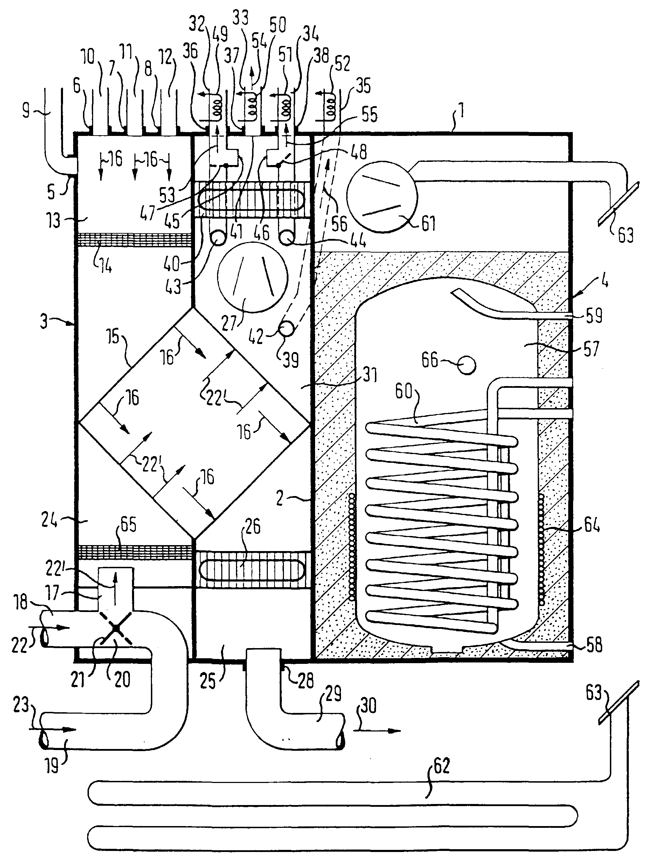

Die Erfindung wird nachfolgend anhand eines Ausführungsbeispiels unter Bezugnahme auf die einzige Figur näher beschrieben.

Das erfindungsgemäße Heizsystem besitzt eine einheitliches Gehäuse 1, in dem durch eine Trennwand 2 voneinander getrennt eine Heizvorrichtung 3 mit Wärmerückgewinnung sowie eine Wassererwärmungseinheit 4 angeordnet sind.

An dem Gehäuse 1 sind Anschlüsse 5, 6, 7, 8 ausgebildet, an die Abluftrohre 9, 10, 11, 12 angeschlossen sind.

Über die Abluftrohre 9, 10, 11, 12 werden verbrauchte und/oder geruchsbelastete Abluftströme 16, beispielsweise aus WC, Dusche, Bad, Küche, Sauna, Trockner oder Dunstabzugshaube in einen Abluftsammelabschnitt 13 des Gehäuses 1 transportiert und über ein Filter 14 zu einem nach dem Kreuzstrom- und/oder Gegenstromprinzip arbeitenden Plattenwärmetauscher 15 geführt.

Die Heizvorrichtung 3 umfaßt weiter einen Anschluß 17, in den ein Umluftrohr 18 und ein Frischluftrohr 19 über eine gemeinsame Verbindungsstelle 20 einmünden. Im Bereich der Verbindungsstelle 20 ist eine Steuerklappe 21 drehbar angeordnet, durch die das Mischungsverhältnis von Umluft 22 und Frischluft 23, die über das Umluftrohr 18 bzw. das Frischluftrohr 19 der Heizvorrichtung 3 zuführbar sind, eingestellt werden kann. Die über den Anschluß 17 in die Heizvorrichtung 3 eintretende Mischluft 22' wird über ein Filter 65 in einen Umluft-/Frischluftabschnitt 24 der Heizvorrichtung 3 und von dort zu dem Plattenwärmetauscher 15 geführt.

Die Heizvorrichtung 3 umfaßt weiter einen Fortluftabschnitt 25 mit einem Verdampferregister 26, das an einem Luft/Luft-Wärmepumpenverdichter 27 angeschlossen ist.

Das Gehäuse 1 weist im Bereich des Fortluftabschnittes 25 einen weiteren Anschluß 28 auf, an dem ein Fortluftrohr 29 zum endgültigen Abführen von Fortluft 30 in die Umgebung angeschlossen ist.

Die Heizvorrichtung 3 umfaßt weiterhin einen Zuluftabschnitt 31, in den Zuluftrohre 32, 33, 34, 35 münden, die an Anschlüssen 36, 37, 38, 39 des Gehäuses 1 angeschlossen sind. Weiterhin ist in dem Zuluftabschnitt 31 ein Kondensator-Register 40 des Wärmepumpenverdichters 27 angeordnet, mit der die Luft im Bereich der Zuluftrohre 32, 33, 34, 35, erwärmbar ist.

Während die Zuluftrohre 33, 35 lediglich stirnseitig Eintrittsöffnungen 41, 42 besitzen, sind an den Zuluftrohren 32, 34 zusätzlich zu stirnseitigen Eintrittsöffnungen 43, 44 seitliche Eintrittsöffnungen 45, 46 vorgesehen. In den Zuluftrohren 32, 34 ist jeweils im Bereich der seitlichen Eintrittsöffnungen 45, 46 eine Steuerklappe 47, 48 angeordnet, über die jeweils das Mischverhältnis der über die stirnseitigen und die seitlichen Eintrittsöffnungen 43, 45 bzw. 44, 46 eintretenden Zuluftströme steuerbar ist.

Innerhalb der Zuluftrohre 32, 33, 34, 35 sind beispielsweise als Rippenrohrheizkörper ausgebildete Heizelemente 49, 50, 51, 52 angeordnet, über die die durch die Zuluftrohre 32, 33, 34, 35 transportierten Zuluftströme 53, 54, 55, 56 separat erwärmbar sind.

Die Wassererwärmungseinheit 4 umfaßt einen Brauchwasserspeicher 57, in dessen unterem Bereich ein Kaltwasserzulauf 58 und im oberen Bereich ein Warmwasserabgang 59 angeordnet sind.

In dem Brauchwasserspeicher 57 ist ein Wärmetauscher 60 angeordnet, dem das Heizungswasser für die Heizelemente 49, 50, 51, 52 und/oder für andere Heizflächen wie Handtuchhalter, Radiatoren usw. entnommen werden kann. Die Wärmepumpe 61 ist dabei mit dem Verdampfer 62 über Schnellkupplungen 63 verbunden.

Im oberen Bereich des Brauchwasserspeichers 57 ist eine Elektroheizpatrone 66 vorgesehen, die dem Brauchwasserspeicher 57 bei Bedarf zur zusätzlichen Erhitzung des in dem Brauchwasserspeicher 57 enthaltenen Wasser zugeschaltet werden kann.

Im folgenden wird die Funktionsweise eines erfindungsgemäß ausgebildeten Heizsystems näher erläutert:

Die Abluftrohre 9, 10, 11, 12 sind so verlegt, daß ihre freien Enden in Räumen mit stark verbrauchter bzw. geruchsbelasteter Luft münden. Dabei können die freien Enden der Rohre 9, 10, 11, 12 auch direkt an beispielsweise mit Ventilatoren versehenen Geräten, wie beispielsweise Dunstabzugshauben oder Wäschetrocknern, angeschlossen sein.

Die Rohre 9, 10, 11, 12 besitzen im wesentlichen denselben Durchmesser, der über im wesentlichen die gesamte Länge der Rohre 9, 10, 11, 12 unverändert relativ klein ist. Auf diese Weise ist gewährleistet, daß die Abluftrohre 9, 10, 11, 12 auch in relativ dünnen Wänden oder in Zwischendecken angeordnet werden können.

Weiterhin besitzen die Abluftrohre 9, 10, 11, 12 keine seitlichen Zuführleitungen, so daß die über die Rohre 9, 10, 11, 12 transportierten Abluftströme 16 nicht in andere Räume austreten können.

Die über die Abluftrohre 9, 10, 11, 12 transportierten Abluftströme 16 werden durch das Filter 14 gereinigt und anschließend dem Plattenwärmetauscher 15 zugeführt.

Die in den warmen Abluftströmen 16 enthaltene Wärmeenergie wird an die im Kreuzstrom und/oder Gegenstrom vorbeigeführte Mischluft 22' abgegeben, wobei diese Mischluft 22' aus reiner Umluft 22, reiner Frischluft 23, oder einer Mischung aus Umluft 22 und Frischluft 23 besteht. Grundsätzlich ist es auch möglich, daß der Wärmetauscher 15 durch einen automatischen, temperaturgesteuerten Bypass umgangen wird, so daß die Mischluft 22' ohne Erwärmung zu dem Zuluftabschnitt 31 geführt wird.

Die in dem Wärmetauscher 15 abgekühlte Abluft 16 wird durch das Verdampferregister 26 geführt, in dem ihr die noch vorhandene, restliche Wärmeenergie entnommen wird und an das Kondensatorregister 40 geleitet wird. Die vollständig entwärmte Fortluft 30 wird dann über das Fortluftrohr 29 der Umgebung zugeführt.

Die in den Zuluftabschnitt 31 transportierte Mischluft 22' tritt zum Teil direkt über die Eintrittsöffnungen 42, 43, 44 in Zuluftrohre 35, 32, 34 und zum Teil nach Erwärmung durch das Kondensatorregister 40 über die seitlichen Eintrittsöffnungen 45, 46 sowie die Eintrittsöffnung 41 in die Zuluftrohre 32, 33, 34 ein. Dabei kann über die Steuerklappen 47, 48 der Zuluftrohre 32, 34 das Mischungsverhältnis zwischen der direkten und der seitlich eintretenden erwärmten Zuluft gesteuert werden.

Die in die Zuluftrohre 32, 33, 34, 35 eintretenden Zuluftströme 53, 54, 55, 56 werden über die Heizelemente 49, 50, 51, 52 erwärmt, wobei jedes dieser Heizelemente separat voneinander regelbar und somit die Temperatur der Zuluftströme 53, 54, 55, 56 ebenfalls separat regelbar ist.

Die Zuluftrohre 32, 33, 34, 35 besitzen im wesentlichen den gleichen über ihre gesamte Länge im wesentlichen gleich bleibenden, kleinen Strömungsquerschnitt, so daß sie auch in schmalen Wänden und/oder Zwischendecken verlegt werden können.

Durch die separate Ansteuerbarkeit der Heizelemente 49, 50, 51, 52 sind die von den Zuluftrohren 53, 54, 55, 56 versorgten Räume, beispielsweise Schlafzimmer, Wohnzimmer, Kinderzimmer, Arbeitszimmer, Eßzimmer usw. jeweils unabhängig voneinander erwärmbar. Soll eines oder mehrere der an die Zuluftrohre 53, 54, 55, 56 angeschlossenen Räume nicht beheizt werden, so kann das jeweilige Heizelement 49, 50, 51, 52 abgeschaltet werden, so daß die dem entsprechenden Zuluftrohr sowie dem entsprechenden Raum zugeführte Luft nicht erhitzt wird und somit keine Energie verschwendet wird.

Mit der Wassererwärmungseinheit 4 kann Brauchwasser, Heizungswarmwasser für Radiatoren und/oder Konvektoren, Heizregister, Wandheizflächen, Fußbodenheizung und/oder Deckenstrahlungsheizungen erzeugt werden. Vorteilhaft wird die Heizenergie für die Heizelemente 49, 50, 51, 52 aus der Wassererwärmungseinheit 4 entnommen.

Je nach Bedarf kann dabei für die Heizelemente 49, 50, 51, 52 Heizenergie von der Wassererwärmungseinheit 4 abgezweigt werden.

Die Erhitzung des Wassers erfolgt dabei über ein Rollrohrheizelement 64, welches mit dem Wärmepumpenverdichter 61 und dem Verdampfer 62 gekoppelt ist.

Der Verdampfer 62 kann dabei beispielsweise bei einem unterkellerten Haus im Arbeitsraum des Kellers vor dem Verfüllen verlegt werden, so daß bei Installation des Heizsystems keine Erdarbeiten erforderlich sind. Der Verdampfer 62 ist mit geeignetem Kältemittel vorgefüllt und wird nach Montage der ebenfalls vorgefüllten Wärmepumpe 61 mit dieser über Schnellkupplungen 63 verbunden. Auf diese Weise ist für die Montage kein speziell ausgebildeter Kältetechniker erforderlich.

Zur weiteren Energieeinsparung können Sonnenkollektoren vorgesehen sein, über die Wärmeenergie unmittelbar in den Wärmetauscher 60 eingespeist werden kann.

Mit dem erfindungsgemäßen Heizsystem ist eine sehr energiesparende Beheizung beispielsweise eines Wohnhauses möglich, wobei zum einen die erforderlichen Rohre praktisch in jeder beliebigen Wand verlegbar sind und zum anderen die zu beheizenden Räume gezielt und ohne Geruchsbelastung erwärmbar sind. Weiterhin wird eine energiesparende, gezielte Steuerung der Temperatur für die zu beheizenden Räume erreicht. Durch die erfindungsgemäße Kombination von Heizvorrichtung und Wassererwärmungseinheit ist eine weitere Verbesserung des Wirkungsgrads und eine Verringerung der benötigten Energie möglich.

### Bezugszeichenliste

- 1: Gehäuse
- 2: Trennwand
- 3: Heizvorrichtung
- 4: Wassererwärmungseinheit
- 5: Anschluß
- 6: Anschluß
- 7: Anschluß
- 8: Anschluß
- 9: Abluftrohr
- 10: Abluftrohr
- 11: Abluftrohr
- 12: Abluftrohr
- 13: Abluftsammelabschnitt
- 14: Filter
- 15: Plattenwärmetauscher
- 16: Abluftströme
- 17: Anschluß
- 18: Umluftrohr
- 19: Frischluftrohr
- 20: Verbindungsstelle
- 21: Steuerklappe
- 22: Umluft
- 22': Mischluft
- 23: Frischluft
- 24: Umluft-/Frischluftabschnitt
- 25: Fortluftabschnitt
- 26: Verdampferregister
- 27: Luft/Luft-Wärmepumpenverdichter
- 28: Anschluß
- 29: Fortluftrohr
- 30: Fortluft
- 31: Zuluftabschnitt
- 32: Zuluftrohr
- 33: Zuluftrohr
- 34: Zuluftrohr
- 35: Zuluftrohr
- 36: Anschluß
- 37: Anschluß
- 38: Anschluß
- 39: Anschluß
- 40: Kondensator-Register
- 41: Eintrittsöffnung
- 42: Eintrittsöffnung
- 43: Eintrittsöffnung
- 44: Eintrittsöffnung
- 45: seitliche Eintrittsöffnung
- 46: seitliche Eintrittsöffnung
- 47: Steuerklappe
- 48: Steuerklappe
- 49: Heizelement
- 50: Heizelement
- 51: Heizelement
- 52: Heizelement
- 53: Zuluftstrom
- 54: Zuluftstrom
- 55: Zuluftstrom
- 56: Zuluftstrom
- 57: Brauchwasserspeicher
- 58: Kaltwasserzulauf
- 59: Warmwasserabgang
- 60: Wärmetauscher
- 61: Wärmepumpenverdichter
- 62: Verdampfer
- 63: Schnellkupplungen
- 64: Rollrohrheizelement
- 65: Filter
- 66: Elektroheizpatrone

## Patentansprüche

1. Warmluft-Heizsystem mit zumindest einem Anschluß (36, 37, 38, 39) für ein Zuluftrohr (32, 33, 34, 35) zum Zuführen von erwärmter Zuluft (53, 54, 55, 56) von dem Heizsystem zu einem zu beheizenden Raum, mit zumindest einem Anschluß (5, 6, 7, 8) für ein Abluftrohr (9, 10, 11, 12) zum Abführen von Luft (16) aus einem Raum zu dem Heizsystem und mit einer Heizvorrichtung (3) zum Erwärmen der durch das Zuluftrohr (32, 33, 34, 35) transportierten Luft (53, 54, 55, 56),
**dadurch gekennzeichnet,**
daß eine Vielzahl von Anschlüssen (36, 37, 38, 39) für eine Vielzahl von Zuluftrohren (32, 33, 34, 35) vorgesehen ist, durch die getrennte Zuluftströme (53, 54, 55, 56) transportierbar sind, und daß die Temperatur zumindest eines Teils der jeweils in den Zuluftrohren (32, 33, 34, 35) transportierten Zuluftströme (53, 54, 55, 56) getrennt regelbar ist.

2. Warmluft-Heizsystem nach Anspruch 1,
**dadurch gekennzeichnet,**
daß eine Vielzahl von Anschlüssen (5, 6, 7, 8) für eine Vielzahl von Abluftrohren (9, 10, 11, 12) vorgesehen ist, durch die getrennte Abluftströme (16) transportierbar sind, und/oder daß die getrennte Temperaturregelung der Zuluftströme (53, 54, 55, 56) durch getrennte Heizelemente (49, 50, 51, 52) erfolgt, die in und/oder an den Zuluftrohren (32, 33, 34, 35) vorgesehen sind, wobei insbesondere die Heizelemente (49, 50, 51, 52) elektrisch und/oder durch ein insbesondere flüssiges, dampf- oder gasförmiges Heizmedium erhitzbar sind.

3. Warmluft-Heizsystem nach einem der vorhergehenden Ansprüche,
**dadurch gekennzeichnet,**
daß die Zuluftströme (53, 54, 55, 56) für die Zuluftrohre (32, 33, 34, 35) an unterschiedlichen Stellen des Heizsystems abgenommen werden und daß die Zuluftströme (53, 54, 55, 56) an diesen unterschiedlichen Stellen zumindest teilweise unterschiedliche Temperaturen besitzen, so daß auf diese Weise die getrennte Temperaturregelung der Zuluftströme (53, 54, 55, 56) erfolgt.

4. Warmluft-Heizsystem nach einem der vorhergehenden Ansprüche, **dadurch gekennzeichnet,**
daß zumindest ein Teil der Zuluftrohre (32, 34) zumindest zwei Zuführöffnungen (43, 45, 44, 46) besitzt, über die dem Zuluftrohr (32, 34) jeweils Zuluft zuführbar ist, und daß in und/oder an dem Zuluftrohr (32, 34) jeweils eine Steuervorrichtung (47, 48) vorgesehen ist, über die die Menge des über die jeweilige Zuführöffnung (43, 45, 44, 46) dem Zuluftrohr (32, 34) zugeführten Zuluftstroms steuerbar ist, wobei insbesondere die Steuervorrichtung als Steuerklappe (47, 48) ausgebildet ist.

5. Warmluft-Heizsystem nach einem der vorhergehenden Ansprüche,
**dadurch gekennzeichnet,**
daß eine Vielzahl von Abluftrohren (9, 10, 11, 12) an den Anschlüssen (5, 6, 7, 8) angeschlossen sind, wobei insbesondere die Abluftrohre (9, 10, 11, 12) annähernd den gleichen Strömungsquerschnitt besitzen, insbesondere zylindrisch ausgebildet sind und annähernd gleichen Durchmesser besitzen, und/oder daß eine Vielzahl von Zuluftrohren (32, 33, 34, 35) an den Anschlüssen (36, 37, 38, 39) angeschlossen sind, wobei insbesondere die Zuluftrohre (32, 33, 34, 35) annähernd den gleichen Strömungsquerschnitt besitzen, insbesondere zylindrisch ausgebildet sind und annähernd gleichen Durchmesser besitzen.

6. Warmluft-Heizsystem nach Anspruch 5,
**dadurch gekennzeichnet,**
daß die Abluftrohre (9, 10, 11, 12) und/oder die Zuluftrohre (32, 33, 34, 35) im wesentlichen über ihrer gesamte Länge einen einheitlichen Strömungsquerschnitt, insbesondere einen einheitlichen Durchmesser besitzen.

7. Warmluft-Heizsystem nach einem der vorhergehenden Ansprüche,
**dadurch gekennzeichnet,**
daß die Anschlüsse (5, 6, 7, 8) für die Abluftrohre (9, 10, 11, 12) zum Abführen von Abluft (16) aus Räumen mit verbrauchter und/oder geruchsbelasteter Luft vorgesehen sind.

8. Warmluft-Heizsystem nach einem der vorhergehenden Ansprüche,
**dadurch gekennzeichnet,**
daß zumindest ein weiterer Anschluß (17) für ein Umluftrohr (18) zum Transportieren von Umluft (22) aus Räumen mit im wesentlichen unbelasteter oder unverbrauchter Luft in das Heizsystem vorgesehen ist, und/oder daß zumindest ein weiterer Anschluß (17) für ein Frischluftrohr (19) zum Transportieren von Frischluft (23) in das Heizsystem vorgesehen ist, wobei insbesondere der Anteil an Frischluft (23) und Umluft (22) steuerbar ist.

9. Warmluft-Heizsystem nach Anspruch 8,
**dadurch gekennzeichnet,**
daß das Umluftrohr (18) und das Frischluftrohr (19) zusammengeführt und an einem gemeinsamen Anschluß (17) angeschlossen sind und daß der Anteil an Umluft (22) und Frischluft (23) über ein in und/oder an der Verbindungsstelle (20) zwischen dem Umluftrohr (18) und dem Frischluftrohr (19) oder im Bereich zwischen der Verbindungsstelle (20) und dem gemeinsamen Anschluß (17) angeordnete Steuervorrichtung, insbesondere über eine Steuerklappe (21) steuerbar ist, und/oder daß das Heizsystem einen Wärmetauscher (15) umfaßt, dem die über die Abluftrohre (9, 10, 11, 12) transportierte Abluft (16) und die über das Umluftrohr (18) und/oder das Frischluftrohr (19) transportierte Umluft (22) und/oder Frischluft (23) zuführbar ist, so daß die Umluft (22) und/oder Frischluft (23) durch die der Abluft (16) entzogene Wärmeenergie erwärmbar ist.

10. Warmluft-Heizsystem nach einem der vorhergehenden Ansprüche,
**dadurch gekennzeichnet,**
daß eine Wassererwärmungseinheit (4), insbesondere zum Erwärmen von Brauchwasser, vorgesehen ist und daß bedarfsweise Wärmeenergie aus der Wassererwärmungseinheit (4) der Heizvorrichtung (3) zuführbar ist, insbesondere daß die Wassererwärmungseinheit (4) einen Wärmetauscher (60) umfaßt und daß in dem Wärmetauscher (60) vorhandenes Heißwasser der Heizvorrichtung (3) zuführbar ist.
